# EUROPÄISCHE PATENTSCHRIFT

(11) **EP 1 663 577 B1**
(45) Veröffentlichungstag und Bekanntmachung des Hinweises auf die Patenterteilung: **13.05.2009**
(21) Anmeldenummer: 03750503.9
(22) Anmeldetag: 10.09.2003
(51) Int. Cl.: B24C 3/32, B24C 7/00, B24C 11/00, B24C 9/00

(54) **VORRICHTUNG ZUM REINIGEN VON INNENWÄNDEN UND VERFAHREN ZUR REINIGUNG VON INNENWÄNDEN MITTELS DER VORRICHTUNG**
DEVICE FOR CLEANING INNER WALLS AND PROCESS OF CLEANING INNER WALLS WITH THAT DEVICE
DISPOSITIF POUR LE NETTOYAGE DE SURFACES INTERNES ET PROCEDE DENETTOYAGE DE SURFACES INTERNES UTILISANT CE DISPOSITIF

(43) Veröffentlichungstag der Anmeldung: 07.06.2006
(73) Patentinhaber: Koczott, Wolfgang, 27721 Ritterhude (DE)
(72) Erfinder: Koczott, Wolfgang, 27721 Ritterhude (DE)
(74) Vertreter: Eisenführ, Speiser & Partner
(86) Internationale Anmeldenummer: PCT/EP2003/010020
(87) Internationale Veröffentlichungsnummer: WO 2005/035192

(56) Entgegenhaltungen:
- EP-A- 0 359 701
- DE-U- 29 807 792
- DE-U- 29 903 106
- US-A- 1 855 646
- US-A- 3 020 140
- US-A- 4 330 968
- US-A- 5 527 203
- US-A- 5 885 133

## Beschreibung

Die vorliegende Erfindung betrifft eine Vorrichtung zum Reinigen von Innenwänden durch Pumpen und Fördern von einem mindestens eine flüssige Komponente und eine abrasive Partikelkomponente aufweisenden Reinigungsfluid, mit mindestens einem ersten Behälter mit einer Befüllöffnung für das Reinigungsfluid und einem Auslaß. Ferner betrifft die Erfindung ein Verfahren zum Reinigen von Innenwänden von Rohrleitungen mittels eines Reinigungsfluids, das mindestens eine flüssige Komponente und eine abrasive Partikelkomponente aufweist und ständig in Bewegung gehalten wird, unter Verwendung der zuvor genannten Vorrichtung.

Zum Reinigen von Oberflächen sind zahlreiche Verfahren und Vorrichtungen bekannt. Vielfach handelt es sich um die Anwendung von Wischvorrichtungen, mit deren Hilfe Verunreinigungen durch Reibung und dadurch einwirkende Scherkräfte von der Oberfläche abgenommen werden. Aber auch viele andere physikalische Effekte sind im Stand der Technik beim Reinigen verwendet, wenn z.B. von einem Schwamm in Reinigungsflüssigkeit gelöste Partikel, die vorher mit dem Schwamm abgewischt wurden, aufgesogen werden. Auch sind Verfahren bekannt, bei denen auf den Effekt des Wischens im Wesentlichen verzichtet wird und bei denen Lösungsmittel durch chemische Reaktion Verschmutzungen entfernen. Letztere Verfahren finden insbesondere dort Anwendung, wo Oberflächen für Wischwerkzeug unzugänglich sind. Dies ist z.B. in Rohrleitungen der Fall, die aufgrund z.B. kurvenreichen Verlaufs nicht dazu geeignet sind, durch langstielige Bürsten oder durch Seilbürsten gereinigt zu werden.

Beispielsweise werden zur Reinigung der in Lackieranlagen üblichen Ringleitungen sogenannte "Reinigungslacke" angeboten. Diese "Lacke" lassen sich mit den in diesen Anlagen vorhandenen Lackpumpen fördern, ohne an diesen selbst Zerstörungen durch Abrasion oder chemischen Angriff hervorzurufen. Entsprechend gering ist die Reinigungswirkung in den zu reinigenden Leitungen.

Dokument US 5527203 zeigt eine Vorrichtung zum Reinigen von Innenwänden durch Pumpen und Fördern von einem mindestens eine flüssige Komponente und eine abrasive Partikelkomponente aufweisenden Reinigungsfluid, einem Behälter mit einer Befüllöffnung für das Reinigungsmedium und einem Auslass, und der Behälter an eine Druckquelle angeschlossen ist, einer an den Auslauf des Behälters angeschlossenen Mischleitung und mit einem Auslass durch den das Reinigungsfluid aus der Mischleitung in zu reinigende Rohrleitungen oder Apparate gelangt, wobei das Reinigungsfluid ständig in Bewegung ist, und ein Absetzen der abrasiven Partikelkomponente des Reinigungsfluids im wesentlichen verhindert wird, wobei die Mischleitung an eine Druckquelle angeschlossen ist, um das Reinigungsfluid aus dem Auslass der Mischleitung zu drücken.

Demgegenüber liegt der vorliegenden Erfindung die Aufgabe zugrunde, eine verbesserte Vorrichtung zum Pumpen und Fördern von einem mindestens eine flüssige Komponente und eine abrasive Partikelkomponente aufweisenden Reinigungsfluid für ein wirkungsvolles Reinigen von Innenwänden von Rohrleitungen und/oder Apparaten mittels eines durch die Vorrichtung geförderten Reinigungsfluides sowie ein solches Verfahren zu schaffen.

Zur Lösung dieser Aufgabe wird gemäß einem ersten Aspekt der vorliegenden Erfindung eine Vorrichtung nach Anspruch 1 vorgesehen.

Gemäß einem zweiten Aspekt der vorliegenden Erfindung wird vorgeschlagen ein Verfahren zum Reinigen von Innenwänden von Rohrleitungen und/oder Apparaten mittels eines Reinigungsfluids, das mindestens eine flüssige Komponente und eine abrasive Partikelkomponente aufweist und ständig in Bewegung gehalten wird, unter Verwendung einer Vorrichtung gemäß dem ersten Aspekt, wobei das Reinigungsfluid an der Innenwand entlang gleitet und die flüssige Komponente des Reinigungsfluids eine suspensionsstabilisierende Komponente enthält.

Bevorzugte Ausführungen und Weiterbildungen des Verfahrens sind in den abhängigen Ansprüchen 3 bis 21 angegeben.

Das im Folgenden beschriebenen einfindungsgemäßen Verfahren und die Pump- und Fördervorrichtung finden Anwendung bei Schleif-, Entgrat-, Entzunder- und Polieranwendungen in schwer zugänglichen Apparaten, Rohrieitungen und Oberflächen beliebiger Formgebung.

Bei dem erfindungsgemäßen Verfahren zum Reinigen von Oberflächen wird ein Reinigungsfluid an der Oberfläche entlang geleitet, und das Reinigungsfluid hat mindestens eine flüssige Komponente sowie eine sehr abrasive Partikelkomponente. Die an der Oberfläche entlang strömenden (hoch-) abrasiven Partikel tragen erfindungsgemäß Verunreinigungen von der Oberfläche ab, und das Reinigungsfluid befördert sie mit seiner Strömung von der Oberfläche weg. Vorzugsweise ist die Innenwand eine Innenwand einer Leitung, eines Apparates und das Reinigungsfluid wird vorzugsweise durch die Leitung bzw. auf die Oberfläche des Apparates gepumpt. Oberflächen beliebiger (unzugänglicher) Formgebung können analog behandelt werden.

Für das Reinigungsfluid bevorzugt ist eine flüssige Komponente, die die Faktoren:
- chemische Lösekraft
- abrasive Komponente
- suspensionsstabilisierende Komponente
- korrosionsschützende Komponente
- glanzbildende Komponente
enthält.

Wesentlich für die Erzielung eines Reinigungseffektes ist die hohe Geschwindigkeit des Fluidums direkt an der Oberfläche. Es muss eine "Pfropfenströmung", besser noch eine hochturbulente Strömung durch geeignete Maßnahmen erreicht werden.

Das Ausbilden der Pfropfenströmung oder einer stark ausgeprägten turbulenten Strömung kann durch Füllkörper als Beigabe zu dem Reinigungsfluid vorzugsweise in Form von Bällen, Kugeln, Stäben, Scheiben, Rohrabschnitten oder Ähnlichem begünstigt werden.

Molche oder molchähnliche Schwämme können ebenfalls Hilfsweise zum unterstützenden Einsatz kommen.

Geführte Strömungskörper, (Staukörper) und/oder der Einsatz geeigneter Düsensysteme können die erforderlichen Strömungsprofile erforderlichenfalls erzeugen und/oder unterstützen.

Die Partikel des Reinigungsfluids haben vorzugsweise eine Korngröße zwischen 0,5 und 3000 µm. Ihre Außenkontur kann rund, zackig, zerklüftet und/oder scharfkantig sein, wobei die Wahl der jeweiligen Außenkontur und der Korngröße z. B. von Werkstoff und der Rauhigkeit der zu reinigenden Oberfläche abhängt. Die Partikel können aus Glas, Kunststoff, Glaspulver, Keramikpulver, Korund, Aluminiumoxid, Titanoxid, Siliziumkarbid, Hartmetall, Hartmetallpulver, Quarz, Kaolin, Glasfaser - / Kohlefasermehl und/oder Bentonit und ähnlichen Materialien hergestellt sein.

Die flüssige Komponente gewährleistet zum Einen die Pumpfähigkeit, zum Anderen soll sie eine möglichst starke Löse- und/oder Quellkraft für die abzulösenden Verunreinigungen erzeugen. Außerdem bildet sie vorzugsweise eine makromolekulare Gelstruktur aus, die die Sinkgeschwindigkeit der abrasiven Partikel vermindert. Als Komponenten der flüssigen Phase kommen im Prinzip alle organischen Lösemittel / Flüssigkeiten, wie z.B., Alkohole, Ketone, Ester, Ether, Acetate, Glykole, Glykolether, Amine, Amide, aliphatische und auch aromatische Kohlenwasserstoffe, etc. außerdem natürlich Wasser und Mischungen aus den vorgenannten Stoffen in Betracht. Die Auswahl der Gelbildenden bzw. thixotropierenden Komponenten im Zusammenspiel mit einem Lösungsmittel ist von großer Bedeutung für die Wirkungsweise des Gesamtsystems. Dabei soll die Sinkgeschwindigkeit der abrasiven Partikel möglichst niedrig gehalten werden, andererseits aber die abrasive Eigenschaft der Partikel an der Rohr- / Apparatewandung nicht eingeschränkt werden, denn das Fluid soll eine möglichst intensive Wandberührung der abrasiven Partikel gewährleisten, was erfindungsgemäß durch hohe Strömungsgeschwindigkeiten, turbulente Strömungen und insbesondere beschleunigte Wandströmungen möglich ist. Mögliche gelbildende bzw. thixotropierende Komponenten sind modifizierte Zellulosen, Polyvinylpyrrolidone, Polyacrylate, Polysuccinate, Polysulfonsäuren, Flockungshilfsmittel, Polycarbonsäuren, pyrogene Kieselsäuren und/oder Poly-Ethylenglykole und ähnlich wirkende Substanzen.

In Einzelfällen ist es möglich die Dichte der Schleifpartikel und die Dichte des Reinigungsfluids dergestalt anzugleichen, dass die Partikel in der Schwebe gehalten werden, ohne dass eine hemmende Gelkomponente zugefügt werden muss.

Lösungssystemabhängig können thixotropierende Komponenten und Effekte den Schwebezustand der Schleifpartikel hervorragend unterstützen, ohne die turbulente Wandströmung durch unnötige Viskositäts-Erhöhung zu bremsen.

Zur Passivierung insbesondere in wässrigen Lösungen sind passivierende, basifizierende Komponenten wie z. B. Amine bevorzugt, wobei z. B. DMEA oder andere Aminoalkohole sowie klassische Korrosionsschutzinhibitoren wie z.B. Alcylsulfonate einsetzbar sind. Zur Vergrößerung der ablösenden Reinigungskräfte sind tensidische und / oder emuligierende Komponenten, ganz allgemein grenzflächenaktive Stoffe, bevorzugt. Hier lassen sich z. B. Alkylsulfonate, Alkyphosphate, Alkylamine, ganz allgemein anionische, kationische und/oder nichtionische Tenside/Emulgatoren und ggf. auch Seifen verwenden. Aber auch andere suspensionsstabilisierende Komponenten sind anwendbar.

Vorzugsweise ist das Reinigungsfluid wie folgt zusammengesetzt. Der Anteil Lösungsmittel beträgt vorzugsweise 10 bis 90 %, abrasive Partikel 10 bis 90 %, Gelbildner 1 bis 15 %, passivierende Bestandteile 0,1 bis 3 %, tensidische, emulgierende Komponenten 0,1 bis 5 % und suspensionsstabilisierende Komponenten 0,1 bis 5 %, Füllkörper 0 - 80 %, thixotropierende Komponenten 0 - 5 %, glanzbildende Komponenten 0 - 5 %. Die Bereiche sind insbesondere deshalb so weit angegeben, weil aufgrund der Anwendungsvielfalt des Reinigungsfluids bezüglich Oberflächenwerkstoff und Beschaffenheit das Reinigungsfluid vorzugsweise anpassbar sein soll. Dabei ist es auch die Art der Verschmutzung und die Rohr- / Apparate- / Oberflächengeometrie (Länge, Durchmesser, Hinterschneidungen und Krümmungsradien), welche die Zusammenstellung beeinflussen.

Die hohe Viskosität des flüssigen Anteils des Reinigungsfluids begünstigt dabei den Transport der Partikel mit dem Fluid, während ein dünnflüssiges Fluid für eine hohe Schleifkraft des Korns an der Oberfläche sorgt.

Bei größeren Rohrdurchmessern kann ein Strömungsprofil entstehen, bei dem im Wandbereich aufgrund von Wandreibung das Fluid mit sehr geringer Geschwindigkeit strömt oder sogar ruht, obwohl die mittlere Fließgeschwindigkeit durch die Leitung beträchtlich ist. Während bei geringen Rohrdurchmessern eine hinreichend große Fließgeschwindigkeit auch im Bereich der Wandungen entsteht, kann sich bei größeren Rohrdurchmessern die Schleifwirkung dort wegen der geringen Geschwindigkeiten nachteilig beträchtlich reduzieren. Um diesem Nachteil entgegenzuwirken, wird bei dem erfindungsgemäßen Verfahren, um eine beschleunigte und/oder turbulente Wandströmung zu bewirken oder zu begünstigen, vorzugsweise ein Strömungskörper von dem Reinigungsfluid mitgeführt, der mit einem Wandelement den Querschnitt der Leitung bis auf einen Randspalt zwischen dessen Außenrandkontur und der Leitungsinnenwand ausfüllt. Durch den Randspalt strömt dann das Reinigungsfluid, welches schneller strömt als der Strömungskörper, an der Leitungsinnenwand entlang und bewirkt die erfindungsgemäße Reinigung mittels der abrasiven Partikel. Ähnlich wirken sich dem jeweiligen Problem angepasste Düsenelemente aus.

Ultraschall oder andere Schwingungen können im Übrigen das erfindungsgemäße Reinigungsverfahren unterstützen.

Für kreisförmige Leitungsquerschnitte ist die Außenrandkontur des Wandelementes des Strömungskörpers vorzugsweise selbst im Wesentlichen kreisförmig. Auf der Außenrandkontur können vorzugsweise Distanzhalter angeordnet sein, die von der Außenrandkontur radial nach außen vorspringen, um den Randspalt für die Durchströmung durch das Reinigungsfluid offen zuhalten und die Außenrandkontur des Wandelementes nicht an der Leitungsinnenwand direkt anschlagen zu lassen. Bevorzugte Ausgestaltungen der Erfindung sind im Folgenden mit Bezug auf die beigefügten Zeichnungen beschrieben.
- Figur 1 bis Figur 4: zeigen jeweils alternative Ausgestaltungen eines Strömungs- / Düsenkörpers in einer zu reinigenden Leitung in Seiten- und Vorderansicht; und
- Figur 5: veranschaulicht ein Reinigungs- Verfahren,
- Figur 6: zeigt ein schematisches Flussdiagramm eines Reinigungs- und Wiederverwendungsverfahrens und
- Figur 7: zeigt eine geschnittene Seitenansicht von einer erfindungsgemäßen Pump- / Fördervorrichtung.

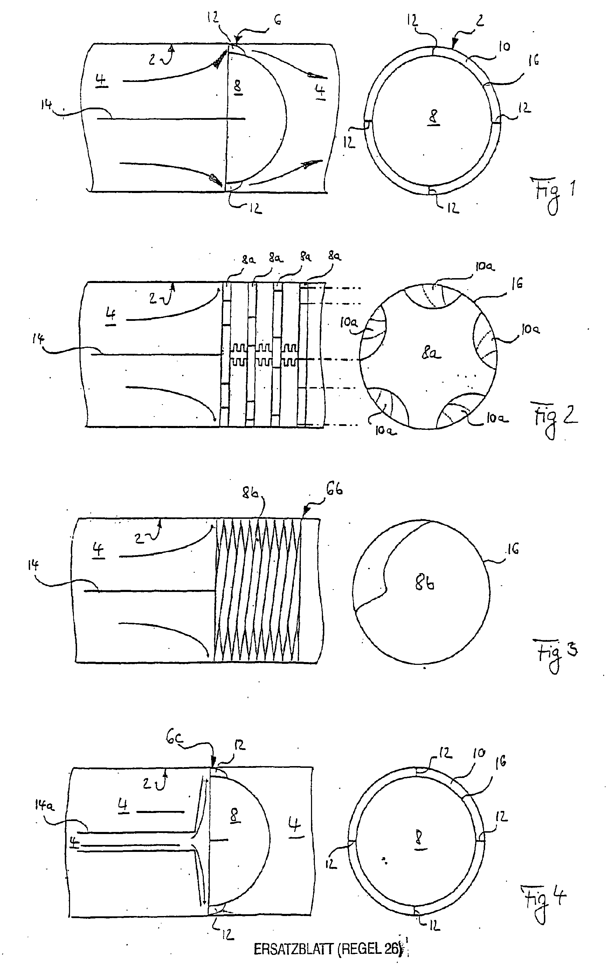

In Figur 1 ist eine Rohrleitung 2 erkennbar, die von einem Reinigungsfluid 4 durchströmt wird, in dem abrasive Partikel 6 (nicht dargestellt) enthalten sind. Die Strömung des Fluids 4 führt einen Strömungskörper 8 mit sich. Der Strömungskörper 8 hat ein Wandelement, das den Querschnitt der Leitung 2 bis auf einen Randspalt 10 zwischen sich und der Innenwand der Leitung 2 ausfüllt. Damit der Strömungskörper 8 in der Leitung nicht zwischen den Leitungsinnenwänden hin und her taumelt, sondern einen kreisringförmigen gleichmäßigen Randspalt 10 freilässt, springen Distanzhalter 12, die gleichmäßig auf der Außenrandkontur des Wandelementes 8 verteilt sind, radial nach außen von der Außenrandkontur vor. Sie gleiten auf der Innenwand der Leitung 2 entlang, und können auch federnd ausgebildet sein, um möglichen Unebenheiten auf der Leitungsinnenwand auszuweichen. Damit das halbkugelförmige Wandelement 8 des Strömungskörpers 6 in der Leitung 2 in der dargestellten Orientierung ausgerichtet bleibt, zieht es ein Schleppankerelement hinter sich her, das nur durch eine Ankerleine 14 angedeutet ist.

Figur 2 zeigt eine alternative Ausgestaltung eines Strömungskörpers 8A. Dieser ist mit vier zueinander parallelen, ebenen, mit Zwischenraum aneinander befestigten und in ihrer Außenrandkontur miteinander fluchtenden Wandelementen 8A aufgebaut. Die Außenrandkontur der Wandelemente 8A entspricht der Innenkontur der Leitung 2, so dass die Wandelemente 8A den Querschnitt der Leitung 2 zunächst vollständig ausfüllen, jedoch in Form der Randspalt-Einbuchtungen 10A, die radial nach innen in die Außenrandkontur der Wandelemente hinein ausgebildet sind, einen Durchgang für das Reinigungsfluid entlang der Leitungsinnenwand freihalten. Die Randspalteinbuchtungen 10A sind auf dem Umfang der Außenrandkontur jedes Wandelementes 8A gleichmäßig verteilt. Die vier Wandelemente 8A sind aber um ihre Mittelachse gegeneinander verdreht, so dass das Reinigungsfluid 4 an jedem Umfangssektor der Innenwand der Leitung 2 entlang strömt und reinigt. Ebenso wie der im folgenden beschriebene alternative Strömungskörper 6B gemäß Figur 3 weist auch der Strömungskörper 6A gemäß Figur 2 einen Schleppanker auf, der durch die Ankerleine 14 angedeutet ist.

Das Wandelement 8B des Strömungskörpers 6B gemäß Figur 3 ist von einer spiralförmig gewundenen Bürste gebildet, deren Borsten radial von einer Mittelachse 14 gegen die Innenwand der Leitung 12 vorspringe. Die Bürste ist hier nur schematisch angedeutet. So kann entsprechend der Darstellung in Figur 3 der Wandkörper auch als massiver spiralförmiger Wandkörper 8B ausgebildet sein, gewissermaßen als Gewinde mit sehr tiefen Gewindegängen, durch die dann das Fluid 4 wie durch ein Labyrinth hindurchströmt.

Figur 4 zeigt eine Variante der in Figur 1 dargestellten Vorrichtung 8, bei der gewissermaßen die Schleppankerleine 14 zu einer Leitung 14A erweitert ist, durch die das Reinigungsfluid 4 mit zusätzlich beschleunigter Strömung hinterseitig gegen den Strömungskörper 6 gepumpt wird, um dann durch den Randspalt 10 mit noch vergrößerter Geschwindigkeit und daher erhöhter Reinigungswirkung hindurchzuströmen (Düsensystem).

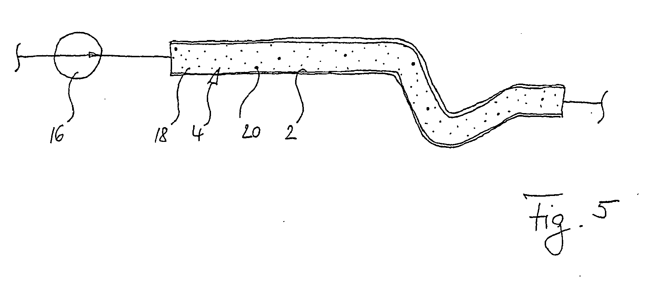

Figur 5 schließlich zeigt ganz allgemein die Durchführung eines Verfahrens ohne Strömungskörper. Hilfsweise werden hier die genannten Füllkörper oder Molche zur Erzeugung der Pfropfenströmung eingesetzt.

Die Pumpe 16 pumpt ein erforderlichenfalls mit Füllkörpern oder Molchen aufgeladenes Reinigungsfluid 18.

Die so erzeugte Pfropfenströmung des Reinigungsfluids 4 in der Leitung 2 lässt das Reinigungsfluid 4 mit seinen abrasiven Partikeln 20 auch an der Leitungswand 2 entlang strömen und reinigt diese erfindungsgemäß

Die Pumpe 16 ist vorzugsweise eine Membranpumpe. Es können mit abnehmender Eignung auch Kolben-, Exzenterschnecken-, Schlauch-, oder eventuell sogar Kreiselpumpen eingesetzt werden.

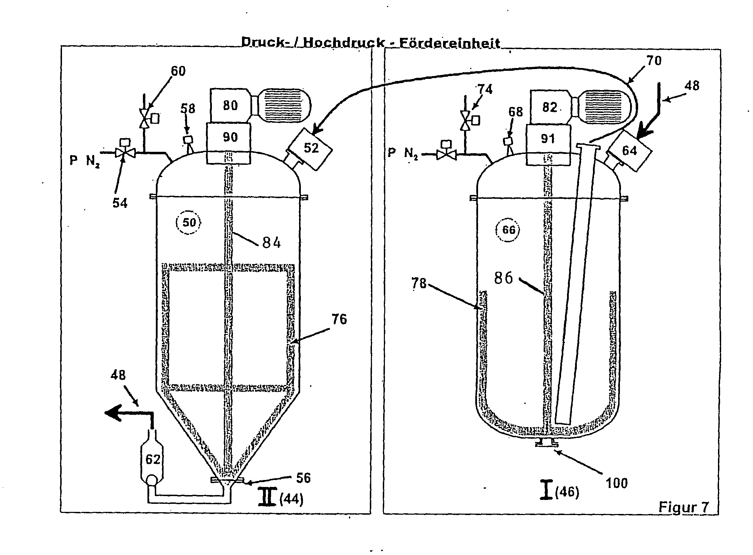

Den oben genannten Pumpen sind im Gesamtverfahren enge und verscheißreiche Grenzen gesetzt. Aus diesem Grunde liegt dem Gesamtverfahren eine aus Figur 7 hervorgehende verschleißarme Fördervorrichtung zugrunde.

Bei dem Verfahren wird das Reinigungsfluid solange im Kreis gefördert, bis eine ausreichende Reinigungswirkung erzielt wurde. Zum vollständigen Austrag aller Partikel ist es erforderlich, am Ende des Reinigungsvorganges das Reinigungsfluid mit dem partikelfreien Trägermaterial auszutragen.

Das Trägermaterial selbst wird mit dem gelfreien Lösungsmittel ausgespült. Dieses Reinigungslösungsmittel wird solange über einem Feinfilter im Kreis gefahren, bis alle abrasiven Bestandteile aus dem Leitungssystem gespült sind.

Nach der Durchführung des Gesamtverfahrens liegt eine verunreinigte Mischfraktion aus abrasivem Reinigungsfluid, partikelfreiem Trägermaterial und reiner Lösungsmittelkomponente vor.

Bestandteil eines Verfahrens zur Rückgewinnung der wesentlichen Inhaltsstoffe des Fluidums sind.
die abrasiven Komponenten,
die Füllkörper,
das Lösungsmittel.

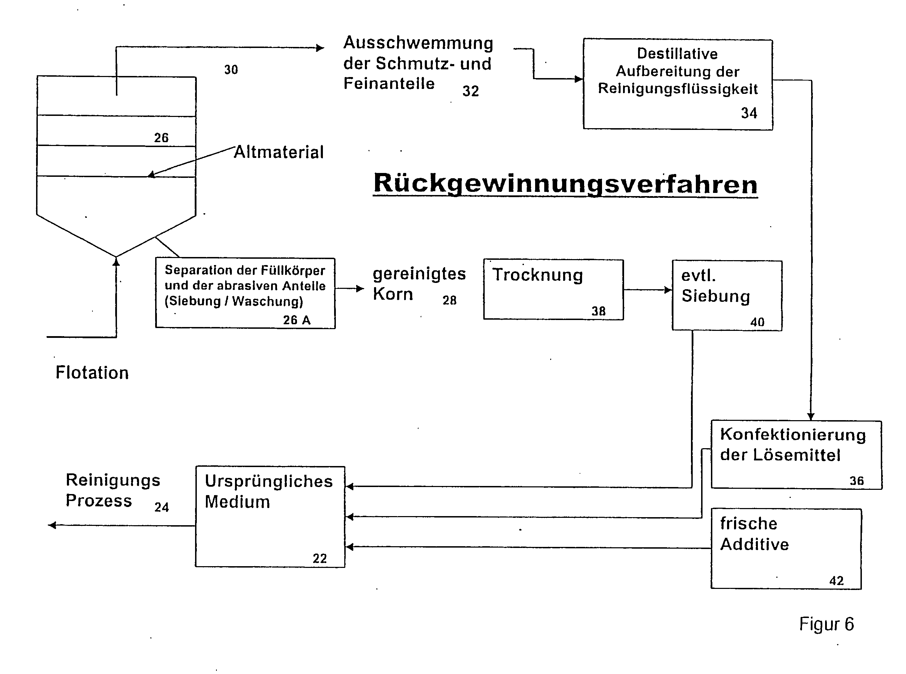

Dieser Wieder-Aufbereitungs-Prozess ist in Figur 6 schematisch dargestellt. Nach Abschluss des gesamten Reinigungsprozesses wird die Mischung aus allen Komponenten in einem Vortrenn-Behälter (26) in die flüssige Komponente und die Partikel-/ Füllkörperkomponente getrennt. Der zurückbleibende Festkörper wird durch flotierende Waschung von Schmutz- und Feinpartikeln im gleichen Behälter befreit.

Der gereinigte Festkörper wird durch waschende Siebung in Behälter 26a in abrasiven Feinanteil und ggf. Füllkörperfraktion getrennt 38. Beide Fraktionen werden nach der evtl. Trocknung verarbeitet.

Die abrasive Fraktion muss u.U. noch von Feinanteilen durch Siebung oder Sichtung befreit werden (40).

Die abgetrennte verschmutzte Flüssigphase wird destillativ aufgearbeitet. Zur Wiederverwendung kommen die Lösungsmittelanteile.

Die Lösemittel werden konfektioniert (36), mit den erforderlichen Additiven (42) versetzt und in einer Mischstufe (22) mit den erforderlichen abrasiven Medien und den Füllkörpern versetzt.

Besondere Bedeutung kommt der erfindungsgemäßen verschleißarmen Spezial-Druckfördereinheit zu.

Mit Blick auf Figur 7 ist eine erfindungsgemäße Pump- / Fördervorrichtung 44, 46 erkennbar. Zunächst wird die Pumpvorrichtung 44 beschrieben, die unter Hochdruck Reinigungsfluid in eine zu reinigende Leitung 48 pumpt.

Diese Einheit stellt ein Druckwechsel - Kessel - System dar, bestehend aus zwei Druck - Rührwerksbehältern, die durch abwechselnde Gasdruck - Beaufschlagung das Medium in die Rohrleitung ( Apparat, beliebig geformte Oberfläche ) fördern, die dann wiederum das aus der Leitung austretende Medium im alternierenden ersten Behälter wieder aufrühren, um es sodann aus diesem unter Druckbeaufschlagung in den zweiten Behälter zu fördern, der dann diese Mischung unter Kreisführung mit Hochdruck in die Leitung pumpt.

Der gesamte Arbeitsgang beginnt damit, das der Druck - Rührbehälter Nr. I (66) mit dem Reinigungsfluid beschickt wird. U.U. wird das Reinigungsfluid in diesem Behälter aus der flüssigen Komponente und den abrasiven Bestandteilen einschließlich der Füllkörper erst aufgebaut.

Die gut durchmischte Mixtur wird dann unter Gasdruck- Beaufschlagung in den Hochdruck - Rührbehälter II (50) gefördert, aus dem sie dann wie nachfolgend technisch detailliert beschrieben unter Hochdruck - Gas- Beaufschlagung in die zu reinigende Leitung gefördert wird.

Der Hochdruck - Rührbehälter 50 der Hochdruck - Fördereinheit 44 wird im drucklosen Zustand durch die Befüll - Öffnung 52 mit dem fertigen Reinigungsmedium befüllt. Dieses wurde u.U., wie später noch beschrieben, in der vorgeschalteten Druckförder - Mischeinheit 46 hergestellt und über die Umfüll - Steigleitung 70 eingefüllt. Der Verschluss 52 reinigt sich selbst und verschließt den Hochdruck - Rührbehälter 50 gasdicht. Das Behälterinnere wird durch Öffnen des N₂ - Druck - Befüll - Ventils 54, das mit einer Druckquelle (nicht dargestellt) verbunden ist, unter Druck gesetzt, so dass die Reinigungsflüssigkeit mit großer Geschwindigkeit durch den Fußauslaß 56 am tiefsten Punkt des Hochdruck - Rührbehälters 50 in die zu reinigende Leitung 48 strömt. Der Füllstand der Reinigungsflüssigkeit im Hochdruck - Rührbehälter 50 wird von einer Füllstandsüberwachung (Radarsonde) 58 überwacht. Kurz vor der Entleerung des Hochdruck - Rührbehälters 50 schließt das N₂ - Druck - Befüll - Ventil 54, und das Druckentlastungsventil 60 öffnet sich zur Entlüftung des Hochdruck - Rührbehälters 50. Das Rückschlagventil 62 dient dazu, eine Rückströmung der Reinigungsflüssigkeit in den sich im drucklosen Zustand befindlichen Hochdruck - Rührbehälter 50 zu verhindern.

Nach Abschluss des so beschriebenen Fördervorganges, also nach Entleerung des Hochdruck - Rührbehälters 50, wird dieser wieder aufgefüllt mittels der ersten Druckförder Mischeinheit 46. Dort hinein verlässt die Reinigungsflüssigkeit die gereinigte Rohrleitung 48 durch die Befüll - Öffnung 64 in den Druck - Rührbehälter 66 der Druckförder - Mischeinheit 46. Dabei werden die Reinigungsfluid - Volumina dergestalt abgestimmt und/oder die Anlage so gesteuert, dass lediglich einer der beiden Druck - Rührbehälter 50, 66, also abwechselnd, gefüllt ist. Auch der Druck - Rührbehälter 66 ist von einer Füllstandserfassung 68 bezüglich seines Füllstandes überwacht. Der Umfüllvorgang aus dem Druck - Rührbehälter 66 in den Hochdruck - Rührbehälter 50 der zweiten Hochdruck - Fördereinheit 44 erfolgt über einen selbstreinigenden Schließmechanismus (Befüll - Öffnung / Verschluss 52) durch die Steigleitung 70 dadurch, dass auch der Druck - Rührbehälter 66 mittels des Ventils 72 unter Druck gesetzt wird, wie es für die Ventile 54, 60 der zweiten Hochdruck - Fördereinheit 44 bereits beschrieben wurde.

Die Rührwerke 76, 78 halten das Reinigungsmedium in den Druck - Rührbehältern 50 und 66 ständig in Bewegung und Verhindern ein Absetzen der Partikelkomponenten und der Füllkörper des Reinigungsfluids. Die Rührwerke 76, 78 sind von Rührwerksmotoren 80, 82 angetrieben, die auf den Druck - Rührbehältern 50 und 66 sitzen. Die Wellendichtungen 90, 91, vorzugsweise doppelt wirkende Gleitringdichtungen mit Drucksyphon - Beaufschlagung, gewährleisten einen sicheren Abschluss der Hochdruck-Gasphase gegen die Atmosphäre.

### Legende zur Fördereinheit

- 50 =: Hochdruck - Rührbehälter II
- 44 =: Hochdruck - Förder-Einheit II
- 52 =: Befüll-Öffnung II
Verschluss II
- 56 =: Fußauslaß II
- 54 =: N₂ -Druck-Befüll-Ventil II
- 48 =: zu reinigende Leitung
- 52 =: Befüll - Öffnung II
Verschluss II
- 58 =: Füllstandserfassung II ( vorzugsweise Radarsonde)
- 60 =: Druckentlastungsventil II
- 62 =: Rückschlagventil
- 46 =: Druckförder - Mischeinheit I
- 64 =: Befüll-Öffnung I
Verschuß I
- 66: Druck - Rührbehälter I
- 68 =: Füllstandserfassung I ( vorzugsweise Radar)
- 70 =: Umfüll - Steigleitung
- 72 =: N₂ - Druck - Befüll - Ventil I
- 74 =: Druckentlastungsventil I
- 76 =: Rührwerk 11
- 78 =: Rührwerk I
- 80 =: Rührwerks - Getriebe - Motor II
- 82 =: Rührwerks - Getriebe - Motor I
- 84 =: Rührwerkswelle II
- 86 =: Rührwerkswelle I
- 90 =: Wellendichtung II
- 91 =: Wellendichtung I
- 100 =: Plan - Fußventil I

## Patentansprüche

1. Vorrichtung zum Reinigen von Innenwänden durch Pumpen und Fördern von einem mindestens eine flüssige Komponente und eine abrasive Partikelkomponente (20) aufweisenden Reinigungsfluid (4),
mit einem ersten Behälter (66) mit einer Befüllöffnung (64) für das Reinigungsfluid (4) und einem Auslaß (70), wobei
in dem ersten Behälter (66) ein Rührwerk (78) angeordnet ist, das von einem Rührwerksmotor (82) angetrieben ist und das Reinigungsfluid (4) ständig in Bewegung hält, um ein Absetzen der abrasiven Partikelkomponente (20) des Reinigungsfluids (4) zu verhindern, und der erste Behälter (66) an eine Druckquelle angeschlossen ist,
mindestens ein zweiter Behälter (50) mit einer an den Auslaß (70) des ersten Behälters (66) angeschlossenen Befüllöffnung (52) und mit einem Auslaß (56), durch das das Reinigungsfluid (4) aus dem zweiten Behälter (50) in zu reinigende Rohrleitungen (2, 48) und/oder Apparate gelangt, vorgesehen ist, wobei in dem zweiten Behälter (50) ein Rührwerk (76) angeordnet ist, das von einem Rührwerksmotor (80) angetrieben ist und das Reinigungsfluid (4) ständig in Bewegung hält, um ein Absetzen der abrasiven Partikelkomponente (20) des Reinigungsfluids (4) zu verhindern, und der zweite Behälter (50) an eine Druckquelle angeschlossen ist, um das Reinigungsfluid (4) aus dem Auslaß (56) des zweiten Behälters (50) zu drücken,
die Befüllöffnung (64) des ersten Behälters (66) über die zu reinigenden Rohrleitungen (2, 48) und/oder Apparate mit dem Auslaß (56) des zweiten Behälters (50) verbunden ist und eine Steuerungseinrichtung vorgesehen ist, die die Vorrichtung (44, 46) derart steuert, dass jeweils nur einer der Behälter (50, 66) mit dem Reinigungsfluid (4) befüllt ist.

2. Verfahren zum Reinigen von Innenwänden von Rohrleitungen (2, 48) und/oder Apparaten mittels eines Reinigungsfluids (4), das mindestens eine flüssige Komponente und eine abrasive Partikelkomponente (20) aufweist und ständig in Bewegung gehalten wird, unter Verwendung einer Vorrichtung nach Anspruch 1, wobei das Reinigungsfluid (4) an der Innenwand entlang gleitet und die flüssige Komponente des Reinigungsfluids (4) eine suspensionsstabilisierende Komponente enthält.

3. Verfahren nach Anspruch 2,
**dadurch gekennzeichnet, dass** die flüssige Komponente des Reinigungsfluides eine Gelstruktur, insbesondere eine makromolekulare Gelstruktur, zur Verminderung der Sinkgeschwindigkeit der abrasiven Partikelkomponente (20) ausbildet.

4. Verfahren nach Anspruch 2 oder 3,
**dadurch gekennzeichnet, dass** das Reinigungsfluid (4) durch die Rohrleitungen (2, 48) und/oder Apparate gepumpt wird.

5. Verfahren nach einem der Ansprüche 2 bis 4,
**dadurch gekennzeichnet, dass** zur Unterstützung der Ausbildung einer Pfropfenströmung und/oder einer hochturbulenten Strömung Füllkörper und/oder Molche in das feinkörnige Reinigungsfluid (4) eingebracht sind, welche vorzugsweise als Molche, Kugeln, Pfropfen, (Gummi-) Bälle, Stäbe, Scheiben, Rohrabschnitte ausgebildet sind.

6. Verfahren nach Anspruch 4 oder 5,
**dadurch gekennzeichnet, dass** die flüssige Komponente schlammartig ist.

7. Verfahren nach einem der Ansprüche 2 bis 6,
**dadurch gekennzeichnet, dass** das Reinigungsfluid (4) nach dem ggf. mehrfachen Durchströmen der Rohrleitungen (2, 48) und/oder Apparate gereinigt bzw. aufbereitet und wieder verwendet wird.

8. Verfahren nach Anspruch 7,
**dadurch gekennzeichnet, dass** die Rohrleitungen (2, 48) und/oder Apparate nach der Reinigung mit partikelfreien Trägermedien und auch reiner Spülflüssigkeit gespült werden.

9. Verfahren nach einem der Ansprüche 2 bis 8,
**dadurch gekennzeichnet, dass** zum Bewirken oder Begünstigen einer beschleunigten und/oder turbulenten Wandströmung ein Strömungskörper (6, 6a, 6b, 6c) von dem Reinigungsfluid (4) mitgeführt wird, der mit einem Wandelement (8, 8a, 8b) den Querschnitt einer Leitung zwischen sich und der Innenwand bis auf einen Randspalt (10) ausfüllt, durch den das schneller als der Strömungskörper (6, 6a, 6b, 6c) strömende Reinigungsfluid (4) an der Innenwand entlang strömt.

10. Verfahren nach Anspruch 9,
**dadurch gekennzeichnet, dass** ein Strömungskörper (6; 6c) mit einer im wesentlichen kreisförmigen Außenrandkontur (16) seines Wandelements (8) für einen im Wesentlichen kreisförmigen Querschnitt einer Rohrleitung (2, 48) verwendet wird.

11. Verfahren nach Anspruch 10,
**dadurch gekennzeichnet, dass** ein Strömungskörper (6; 6c) mit von seiner Außenrandkontur (16) radial nach außen vorspringenden Distanzhaltern (12) verwendet wird.

12. Verfahren nach Anspruch 9,
**dadurch gekennzeichnet, dass** ein Strömungskörper (6a) mit radial nach innen in seine Außenrandkontur (16) hinein ausgebildeten Randspalt-Einbuchtungen (10a) verwendet wird.

13. Verfahren nach Anspruch 9,
**dadurch gekennzeichnet, dass** ein Strömungskörper (6a) mit mindestens zwei in Strömungsrichtung fluchtend mit Zwischenraum aneinander befestigten Wandelementen (8a), deren radial nach innen in die Außenrandkontur (16) hinein ausgebildete Randspalt-Einbuchtungen (10a) um die Strömungsrichtung zueinander verdreht sind, verwendet wird.

14. Verfahren nach einem der Ansprüche 2 bis 13,
**dadurch gekennzeichnet, dass** das Reinigungsfluid (4) zum Schwingen gebracht wird.

15. Verfahren nach Anspruch 14,
**dadurch gekennzeichnet, dass** die Rohrleitungen (2) und/oder Apparate mittels einer Vibrationseinrichtung oder einer Ultraschallsendevorrichtung zum Schwingen gebracht werden.

16. Verfahren nach einem der Ansprüche 2 bis 15,
**dadurch gekennzeichnet, dass** eine abrasive Partikelkomponente (20) mit Korngrößen zwischen 0,5 und 3000 µm verwendet wird.

17. Verfahren nach einem der Ansprüche 2 bis 16,
**dadurch gekennzeichnet, dass** eine abrasive Partikelkomponente (20) verwendet wird, deren Korngeometrie rund und/oder zerklüftet und/oder scharfkantig ist.

18. Verfahren nach einem der Ansprüche 2 bis 17,
**dadurch gekennzeichnet, dass** als abrasive Partikelkomponente (20) Körner oder Kugeln aus Glas, Keramik, Kunststoff, Korund, Aluminiumoxid, Titanoxid, Siliziumkarbid, Hartmetall, Quarz, Kaolin und/oder Bentonit, Glasfaser oder Kohlefasermehl und andere abrasive Stoffe verwendet werden.

19. Verfahren nach Anspruch 18,
**dadurch gekennzeichnet, dass** Kugeln mit einem Durchmesser von 2 bis 30 mm, vorzugsweise 10 bis 30 mm, verwendet werden.

20. Verfahren nach einem der Ansprüche 2 bis 19,
**dadurch gekennzeichnet, dass** ferner mindestens ein passivierendes Additiv verwendet wird.

21. Verfahren nach einem der Ansprüche 2 bis 20,
**dadurch gekennzeichnet, dass** mindestens eine zusätzliche tensidische und/oder emulgierende und/oder suspensionsbildende und/oder eine die Thixotropierung des Materials fördernde Reinigungskomponente verwendet werden.

## Claims

1. An apparatus for cleaning inner walls by pumping and conveying a cleaning fluid (4) comprising at least one liquid component and one abrasive particle component (20), with a first container (66) with a filling opening (64) for the cleaning fluid (4) and an outlet (70), wherein
the first container (66) has arranged in it a stirring mechanism (78) which is driven by a stirring-mechanism motor (82) and which keeps the cleaning fluid (4) constantly in motion in order to prevent the abrasive particle component (20) of the cleaning fluid (4) from being deposited, and the first container (66) is attached to a pressure source,
at least one second container (50) with a filling opening (52) attached to the outlet (70) of the first container (66) and with an outlet (56), through which the cleaning fluid (4) passes out of the second container (50) into pipelines (2, 48) and/or apparatus to be cleaned, is provided, wherein the second container (50) has arranged in it a stirring mechanism (76) which is driven by a stirring-mechanism motor (80) and which keeps the cleaning fluid (4) constantly in motion in order to prevent the abrasive particle component (20) of the cleaning fluid (4) from being deposited, and the second container (50) is attached to a pressure source in order to press the cleaning fluid (4) out of the outlet (56) of the second container (50),
the filling opening (64) of the first container (66) is connected to the outlet (56) of the second container (50) by way of the pipelines (2, 48) and/or apparatus to be cleaned, and a control apparatus is provided which controls the apparatus (44, 46) in such a way that only one of the containers (50, 66) is filled with the cleaning fluid (4) in each case.

2. A method of cleaning inner walls of pipelines (2, 48) and/or apparatus by means of a cleaning fluid (4) which comprises at least one liquid component and one abrasive particle component (20) and which is kept constantly in motion, whilst using an apparatus according to Claim 1, wherein the cleaning fluid (4) glides along the inner wall, and the liquid component of the cleaning fluid (4) contains a suspension-stabilizing component.

3. A method according to Claim 2, **characterized in that** the liquid component of the cleaning fluid forms a gel structure, in particular a macromolecular gel structure, in order to reduce the rate of descent of the abrasive particle component (20).

4. A method according to Claim 2 or 3, **characterized in that** the cleaning fluid (4) is pumped through the pipelines (2, 48) and/or apparatus.

5. A method according to any one of Claims 2 to 4, **characterized in that**, in order to assist the formation of a plug flow and/or a highly turbulent flow, the fine-grain cleaning fluid (4) has introduced into it fillers and/or pigs [pipeline inspection gauges] which are preferably in the form of pigs, spheres, plugs, (rubber) balls, rods, discs or pipe portions.

6. A method according to Claim 4 or 5, **characterized in that** the liquid component is like a sludge.

7. A method according to any one of Claims 2 to 6, **characterized in that** the cleaning fluid (4) is cleaned or processed after flowing - optionally a multiplicity of times - through the pipelines (2, 48) and/or apparatus and is used again.

8. A method according to Claim 7, **characterized in that** after the cleaning the pipelines (2, 48) and/or apparatus are rinsed with particle-free carrier media and also clean rinsing liquid.

9. A method according to any one of Claims 2 to 8, **characterized in that,** in order to carry out or enhance an accelerated and/or turbulent wall flow, a flow member (6, 6a, 6b, 6c) is jointly conveyed by the cleaning fluid (4), the flow member (6, 6a, 6b, 6c) filling with a wall element (8, 8a, 8b) the cross-section of a line between it and the inner wall as far as a marginal gap (10) through which the cleaning fluid (4) - flowing more rapidly than the flow member (6, 6a, 6b, 6c) - flows along the inner wall.

10. A method according to Claim 9, **characterized in that** a flow member (6; 6c) with a substantially circular outer edge contour (16) of its wall element (8) is used for a substantially circular cross-section of a pipeline (2, 48).

11. A method according to Claim 10, **characterized in that** a flow member (6; 6c) with spacing holders (12) projecting radially outwards from its outer edge contour (16) is used.

12. A method according to Claim 9, **characterized in that** a flow member (6a) with edge gap indentations (10a) formed radially inwards into its outer edge contour (16) is used.

13. A method according to Claim 9, **characterized in that** a flow member (6a) with at least two wall elements (8a), which are fastened to each other in alignment with the interspace in the flow direction and the edge gap indentations (10a) of which formed radially inwards into the outer edge contour (16) are rotated with respect to one another about the flow direction, is used.

14. A method according to any one of Claims 2 to 13, **characterized in that** the cleaning fluid (4) is caused to oscillate.

15. A method according to Claim 14, **characterized in that** the pipelines (2) and/or apparatus are caused to oscillate by means of a vibration device or an ultrasonic transmission apparatus.

16. A method according to any one of Claims 2 to 15, **characterized in that** an abrasive particle component (20) with grain sizes of between 0·5 and 3000 µm is used.

17. A method according to any one of Claims 2 to 16, **characterized in that** an abrasive particle component (20), the grain geometry of which is round and/or fissured and/or sharp-edged, is used.

18. A method according to any one of Claims 2 to 17, **characterized in that** grains or spheres of glass, ceramic materials, plastics materials, corundum, aluminium oxide, titanium oxide, silicon carbide, hard metal, quartz, kaolin and/or bentonite, glass fibres or carbon-fibre dust and other abrasive substances are used as the abrasive particle component (20).

19. A method according to Claim 18, **characterized in that** spheres with a diameter of from 2 to 30 mm, preferably from 10 to 30 mm, are used.

20. A method according to any one of Claims 2 to 19, **characterized in that** at least one passivizing additive is additionally used.

21. A method according to any one of Claims 2 to 20, **characterized in that** at least one additional tensidic and/or emulsifying and/or suspension-forming cleaning component and/or a cleaning component promoting the thixotropization of the material is used.

## Revendications

1. Dispositif de nettoyage de surfaces internes par aspiration et acheminement d'au moins un composant liquide et un fluide de nettoyage (4) présentant des composants particulaires abrasifs (20) avec un premier récipient (66) doté d'une ouverture de remplissage (64) pour le fluide de nettoyage (4) et une évacuation (70),
dans lequel dans le premier récipient (66), un agitateur (78) est disposé, qui est actionné par un moteur d'agitateur (82) et maintient constamment en mouvement le fluide de nettoyage (4) pour empêcher un dépôt des composants particulaires abrasifs (20) du fluide de nettoyage (4) et le premier récipient (66) est raccordé à une source de pression,
au moins un deuxième récipient (50) comportant une ouverture de remplissage (52) reliée au premier récipient (66) et à l'évacuation (56) est prévu, par lequel le fluide de nettoyage (4) issu du deuxième récipient (50) parvient aux conduites (2, 48) et/ou aux appareils à nettoyer, un agitateur (76) étant disposé dans le deuxième récipient (50), qui est actionné par un moteur d'agitateur (80) et maintient constamment en mouvement le fluide de nettoyage (4) pour empêcher un dépôt des composant particulaires abrasifs (20) du fluide de nettoyage (4) et le deuxième récipient (50) est raccordé à une source de pression pour mettre sous pression le fluide de nettoyage (4) issu de l'évacuation (56) du deuxième conteneur (50),
l'ouverture de remplissage (64) du premier récipient (66) étant reliée par les conduites (2, 48) et/ou appareils à nettoyer avec l'évacuation (56) du deuxième récipient (50) et un dispositif de commande étant prévu, qui commande le dispositif (44, 46) de telle sorte que seul l'un des récipients (50, 66) soit rempli respectivement par le fluide de nettoyage (4).

2. Procédé de nettoyage de surfaces internes de conduites (2, 48) et/ou appareils au moyen d'un fluide de nettoyage (4) qui présente au moins un composant liquide et des composants particulaires abrasifs (20) et est maintenu constamment en mouvement, en utilisant un dispositif selon la revendication 1, le fluide de nettoyage (4) glissant le long de la surface interne et les composants liquides du fluide de nettoyage (4) contenant des composants de stabilisation de suspension.

3. Procédé selon la revendication 2,
**caractérisé en ce que** le composant liquide du fluide de nettoyage forme une structure en gel, en particulier une structure en gel macromoléculaire, pour réduire la vitesse de décantation des composants particulaires abrasifs (20).

4. Procédé selon la revendication 2 ou 3,
**caractérisé en ce que** le fluide de nettoyage (4) est aspiré dans les conduites (2, 48) et/ou les appareils.

5. Procédé selon l'une des revendications 2 à 4,
**caractérisé en ce que**, pour favoriser la formation d'un écoulement piston et/ou d'un écoulement à turbulences élevées, des corps de remplissage et/ou grattoirs sont intégrés dans le fluide de nettoyage (4) à fine granulation, qui sont constitués de préférence de grattoirs, de billes, de pistons, de billes (de caoutchouc), de bâtonnets, de disques, de tronçons tubulaires.

6. Procédé selon la revendication 4 ou 5,
**caractérisé en ce que** le composant liquide est de type boue.

7. Procédé selon l'une des revendications 2 à 6,
**caractérisé en ce que** le fluide de nettoyage (4) est purifié ou préparé après avoir parcouru éventuellement plusieurs fois les conduites (2, 48) et/ou les appareils et est réutilisé.

8. Procédé selon la revendication 7,
**caractérisé en ce que** les conduites (2, 48) et/ou les appareils sont rincés après le nettoyage avec des matériaux sans particules et également avec un liquide de rinçage pur.

9. Procédé selon l'une des revendications 2 à 8,
**caractérisé en ce que**, pour entraîner ou favoriser un écoulement accéléré et/ou à turbulences, un corps d'écoulement (6, 6a, 6b, 6c) du fluide de nettoyage (4) est également acheminé, qui remplit avec un élément de surface (8, 8a, 8b), la section d'une conduite entre celui-ci et la surface interne jusqu'à une fente périphérique (10) par laquelle le fluide de nettoyage (4) s'écoulant plus rapidement que le corps d'écoulement (6, 6a, 6b, 6c) s'écoule le long de la surface interne.

10. Procédé selon la revendication 9,
**caractérisé en ce que** le corps d'écoulement (6, 6c) est utilisé avec un contour périphérique externe essentiellement circulaire (16) de son élément de surface (8) pour une section essentiellement circulaire d'une conduite (2, 48).

11. Procédé selon la revendication 10,
**caractérisé en ce qu'**un corps d'écoulement (6, 6c) est utilisé avec des éléments de maintien de distance (12) dépassant vers l'extérieur radialement de son contour externe (16).

12. Procédé selon la revendication 9,
**caractérisé en ce qu'**un corps d'écoulement (6a) est utilisé avec des indentations (10a) formées radialement vers l'intérieur dans son contour externe (16).

13. Procédé selon la revendication 9,
**caractérisé en ce qu'**un corps d'écoulement (6a) est utilisé avec au moins deux éléments de surface (8a) fixés l'un à l'autre avec un espace intermédiaire alignés dans le sens d'écoulement, dont les indentations (10a) formées radialement vers l'intérieur dans le contour externe (16) sont tournées les unes vers les autres dans le sens d'écoulement.

14. Procédé selon l'une des revendications 2 à 13,
**caractérisé en ce que** l'on confère au liquide de nettoyage (4) un mouvement oscillant.

15. Procédé selon la revendication 14,
**caractérisé en ce que** l'on confère aux conduites (2) et/ou aux appareils, un mouvement oscillant au moyen d'un dispositif vibrant ou d'un dispositif à ultrasons.

16. Procédé selon l'une des revendications 2 à 15,
**caractérisé en ce que** l'on utilise un composant particulaire (20) présentant une taille de particules entre 0,5 et 3000 µm.

17. Procédé selon l'une des revendications 2 à 16,
**caractérisé en ce que** l'on utilise un composant particulaire abrasif (20) dont la configuration des grains est arrondie et/ou présente des crevasses et/ou des arêtes acérées.

18. Procédé selon l'une des revendications 2 à 17,
**caractérisé en ce que** l'on utilise comme composants particulaires abrasifs (20), des grains ou des billes de verre, de céramique, de matières plastique, de corindon, d'oxyde d'aluminium, d'oxyde de titane, de carbure de silicium, de métaux durs, de quartz, de kaolin et/ou de bentonite, de fibres de verre ou de farine de fibres de carbone et autres substances abrasives.

19. Procédé selon la revendication 18,
**caractérisé en ce que** l'on utilise des billes présentant un diamètre de 2 à 30 mm, de préférence de 10 à 30 mm.

20. Procédé selon l'une des revendications 2 à 19,
**caractérisé en ce que** l'on utilise en outre au moins un additif de passivation.

21. Procédé selon l'une des revendications 2 à 20,
**caractérise en ce que** l'on utilise en outre au moins un autre composant nettoyant tensioactif et/ou émulsionnant et/ou de mise en suspension et/ou favorisant la thixotropie du matériau.
